# EUROPEAN PATENT APPLICATION

(11) **EP 4 567 311 A1**
(43) Date of publication of application: **11.06.2025**
(21) Application number: 23842257.0
(22) Date of filing: 17.07.2023
(51) Int. Cl.: F16K 5/10, F16K 5/06, F16K 1/22

(54) **VALVE**

(30) Priority: 19.07.2022 CN 202210849492
(71) Applicant: York Guangzhou Air Conditioning and Refrigeration Co., Ltd., Qingyuan, Guangdong 511685 (CN); Johnson Controls Tyco IP Holdings LLP, Milwaukee, WI 53209 (US)
(72) Inventor: DING, Xiaofeng, Qingyuan, Guangdong 511685 (CN); WEI, Donghong, Qingyuan, Guangdong 511685 (CN); PAN, Yiwen, Qingyuan, Guangdong 511685 (CN)
(74) Representative: Meissner Bolte Nürnberg
(86) International application number: PCT/CN2023/107710
(87) International publication number: WO 2024/017194

(57) **Abstract**

Disclosed in the present application is a valve, comprising a housing, a first valve body, a second valve body and a control assembly. The housing defines a housing channel. The first valve body is arranged in the housing channel in a rotatable manner, defines a valve body channel, and can connect or disconnect the housing channel. The second valve body is arranged in the valve body channel in a rotatable manner, so as to connect or disconnect the valve body channel. The control assembly is configured to control the rotation of the first valve body and the second valve body. The valve of the present application is controlled to rotate by means of the control assembly. More specifically, an external control device (for example, an electric motor) controls the opening and closing of the valve simply by means of controlling a shaft rod, thereby simplifying the control logic of the valve.

## Description

### Technical Field

The present application relates to the field of valves.

### Background Art

In the state of art, a butterfly valve is used for regulating the flow rate, and a ball valve is used for shutting off flow of fluid. However, existing valves are not capable of achieving functions of both the butterfly valves and the ball valves simultaneously.

### Summary of the Invention

Exemplary embodiments of the present application can address at least some of the problems described above. The present application provides a valve, comprising a housing, a first valve body, a second valve body and a control assembly. The housing defines a housing channel. The first valve body is arranged in the housing channel in a rotatable manner, defines a valve body channel, and can connect or disconnect the housing channel. The second valve body is arranged in the valve body channel in a rotatable manner, so as to connect or disconnect the valve body channel. The control assembly is configured to control the rotation of the first valve body and the second valve body.

According to the valve described above, the second valve body has a first position, a second position and a third position and is rotatable among the first position, the second position and the third position, and the first valve body has an open position and a closed position and is rotatable between the open position and the closed position, wherein the control assembly, the first valve body and the second valve body are configured such that when the second valve body is rotated between the first position and the second position, the first valve body is in the open position; when the second valve body is rotated from the second position to the third position, the second valve body drives the first valve body to be rotated from the open position to the closed position.

According to the valve described above, the valve further comprises a reset device. The reset device is configured such that when the second valve body is rotated from the third position to the second position, the reset device rotates the first valve body from the closed position to the open position.

According to the valve described above, the control assembly comprises a shaft rod, a sleeve and a cover. The shaft rod is connected to the second valve body and rotated together with the second valve body. The sleeve is sleeved on the shaft rod and rotated together with the first valve body. A cover, the cover being arranged above the sleeve and connected to the housing. The shaft rod and the sleeve are provided with a first control structure thereon, the first control structure being configured such that when the second valve body is rotated from the second position to the third position, the second valve body drives the first valve body to be rotated from the open position to the closed position. The cover and the sleeve are provided with a second control structure thereon, the second control structure being configured to rotate the first valve body between the open position and the closed position.

According to the valve described above, the reset device is a torsion spring, one end of the torsion spring being arranged on the housing, and the other end of the torsion spring being arranged on the sleeve.

According to the valve described above, the first control structure comprises a shaft rod guide bar being arranged on a side of the shaft rod and extending outwardly in a radial direction, and a sleeve guide groove being arranged on the sleeve and disposed circumferentially. The sleeve guide groove and the shaft rod guide bar are configured such that when the shaft rod guide bar is accommodated in the sleeve guide groove and rotated within the sleeve guide groove, the shaft rod is movable relative to the sleeve; when the shaft rod guide bar is located at an end of the sleeve guide groove, the shaft rod guide bar is capable of applying a force to the sleeve to drive the sleeve to be rotated.

According to the valve described above, angle formed by two ends of the sleeve guide groove is 90°.

According to the valve described above, the second control structure comprises a sleeve guide bar being arranged at an upper part of the sleeve and extending in an axial direction, and a cover guide groove being arranged on the cover and disposed circumferentially.

According to the valve described above, the angle formed by two ends of the cover guide groove is 90°.

According to the valve described above, when the second valve body is located and rotated between the first position and the second position, the second valve body is capable of regulating a flow rate of a fluid flowing through the valve.

The valve of the present application is controlled to rotate by means of the control assembly. More specifically, an external control device (for example, an electric motor) controls the opening and closing of the valve simply by means of controlling a shaft rod, thereby simplifying the control logic of the valve.

### Brief Description of the Drawings

The features and advantages of the present application may be better understood by reading the following detailed description with reference to the accompanying drawings, throughout which the same components will be denoted by the same reference numerals, and in which:
FIG. 1A is a perspective view of a valve of the present application;
FIG. 1B is an exploded view of the valve shown in FIG. 1A;
FIG. 2 is a perspective view of the shaft rod shown in FIG. 1B;
FIG. 3 is a perspective view of the sleeve shown in FIG. 1B;
FIG. 4 is a perspective view of the cover shown in FIG. 1B;
FIG. 5A is a schematic diagram of a first control structure and a second control structure when a first valve body is in an open position and a second valve body is in a first position;
FIG. 5B is a schematic diagram of the first control structure and the second control structure when the first valve body is in a closed position and the second valve body is in a second position; and
FIG. 5C is a schematic diagram of the first control structure and the second control structure when the first valve body is in the closed position and the second valve body is in a third position.

### Detailed Description of Embodiments

Various specific implementations of the present invention will be described below with reference to the accompanying drawings, which constitute a part of this specification. It should be understood that although terms, such as "front", "back", "up", "down", "left", "right" etc., that represent directions are used in the present invention to directionally or orientationally describe various example structural parts and elements of the present invention, these terms are used here for ease of illustration only and determined based on example orientations shown in the accompanying drawings. Since the embodiments disclosed in the present invention may be disposed in different directions, these terms that represent directions are for illustration only and should not be considered as limitation. In the accompanying drawings below, the same reference numerals will be used for the same parts.

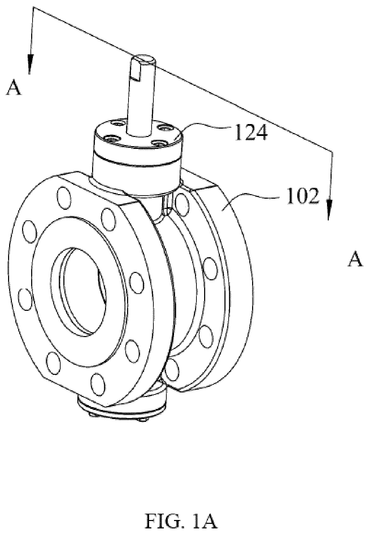

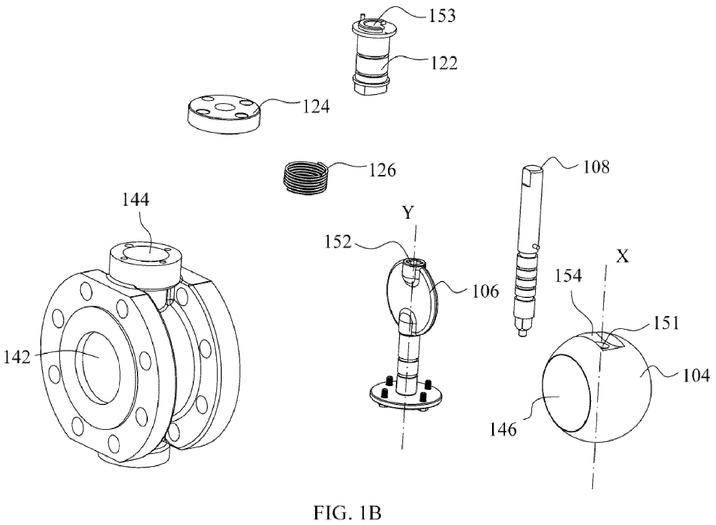

FIG. 1A is a perspective view of a valve of the present application, and FIG. 1B is an exploded view of the valve shown in FIG. 1A. As shown in FIGS. 1A-1B, the valve comprises a housing 102, a first valve body 104, a second valve body 106, a control assembly, and a cover 124. The first valve body 104 and the second valve body 106 are arranged in the housing 102. The control assembly controls the rotation of the first valve body 104 and the second valve body 106. Specifically, the housing 102 defines a housing channel 142.The housing channel 142 is formed by extending in a front-back direction and has a substantially circular cross-section. A portion of the housing channel 142 is substantially spherical to accommodate the first valve body 104. The housing 102 also defines a control channel extending in an up-down direction. The control channel is in communication with the spherical housing channel 142. The cover 124 is arranged above the housing 102 and connected to the housing 102 to close the control channel.

As shown in FIGS. 1A-1B, the first valve body 104 is substantially a truncated sphere that is truncated at the left and right ends. The first valve body 104 is arranged in the housing channel 142 and has a first valve body axis X. The first valve body axis X is arranged substantially perpendicular to the extension direction (i.e., the up-down direction) of the housing channel 142. The first valve body 104 is rotatable around the first valve body axis X. The first valve body 104 defines a valve body channel 146. The valve body channel 146 has a circular cross-section. The first valve body 104 has an open position and a closed position and is rotatable between the open position and the closed position. Specifically, when the first valve body 104 is in the open position, the extension direction of the valve body channel 146 is substantially consistent with the extension direction of the housing channel 142, and the valve body channel 146 is in fluid communication with the housing channel 142.When the first valve body 104 is in the closed position, the extension direction of the valve body channel 146 is substantially perpendicular to the extension direction of the housing channel 142, thereby disconnecting portions of the housing channel 142 flanking the valve body channel 146. **In** the present application, the first valve body 104 is rotatable by 90° to be rotated between the open position and the closed position.

As shown in FIGS. 1A-1B, the second valve body 106 is substantially plateshaped and has a substantially circular cross-section. The second valve body 106 is arranged in the valve body channel 146 of the first valve body 104 and has a second valve body axis Y. The second valve body axis Y is arranged along an up-down direction. The second valve body 106 is rotatable around the second valve body axis Y. The second valve body 106 has a first position and a second position and is rotatable between the first position and the second position. Specifically, when the second valve body 106 is in the first position, the plateshaped extension plane of the second valve body 106 is substantially arranged in a front-back direction, thereby connecting the valve body channel 146. When the second valve body 106 is in the second position, the second valve body 106 connects the valve body channel 146. It should also be noted that when the second valve body 106 is rotated between the first position and the second position, a flow rate of a fluid passing through the valve body channel 146 can be controlled. In the present application, the second valve body 106 is rotated by 90° to be rotated between the first position and the second position.

It should be noted that the first position and the second position of the second valve body 106 are relative to the housing 102 and the first valve body 104 being in the open position. That is, when the second valve body 106 is in the first position or the second position, the first valve body 104 is held in the open position.

In addition, the second valve body 106 further has a third position. The third position of the second valve body 106 is relative to the housing 102. That is, when the second valve body 106 moves from the second position to the third position, the second valve body 106 is stationary relative to the first valve body 104 and moves relative to the housing 102. In the present application, when the second valve body 106 continues to be rotated by 90° from the second position, the second valve body 106 is in the third position.

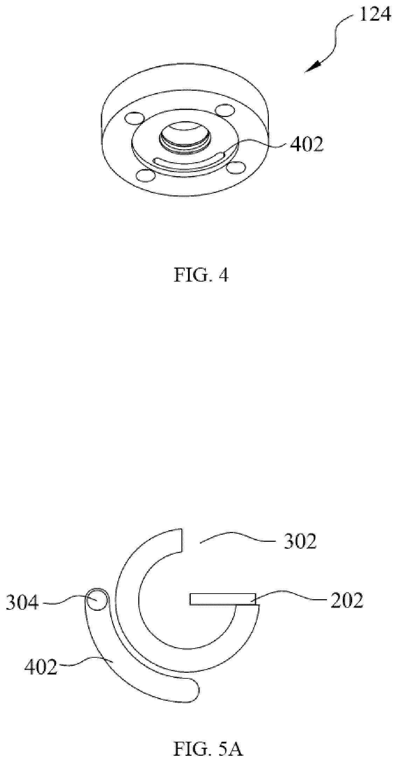

The movement of the first valve body 104 between the open position and the closed position, and the movement of the second valve body 106 among the first position, the second position, and the third position will be described below with reference to FIGS. 5A-5C.

As shown in FIGS. 1A-1B, the control assembly comprises a shaft rod 108, a sleeve 122 and a reset device 126. The shaft rod 108 is connected to the second valve body 106, thereby being rotated together with the second valve body 106. The sleeve 122 is sleeved on the shaft rod 108 and connected to the first valve body 104, thereby being rotated together with the first valve body 104. Specifically, the top of the first valve body 104 is provided with a first through-hole 151. The upper part of the second valve body 106 is provided with a first hole 152. The first hole 152 is formed by recessing downwardly from an upper part of the second valve body 106. A lower end of the shaft rod 108 is capable of being accommodated in the first hole 152 after passing through the first through-hole 151. As an example, the lower end of the shaft rod 108 and the first hole 152 are square-shaped, thereby enabling the shaft rod 108 and the second valve body 106 to be rotated together in a circumferential direction. A second through-hole 153 extending in an up-down direction is provided on the sleeve 122. The shaft rod 108 is accommodated within the second through-hole 153. An upper part of the first valve body 104 is provided with a second hole 154. The second hole is formed by recessing downwardly from the upper part of the first valve body 104. A lower end of the sleeve 122 is capable of being accommodated in the second hole 154. As an example, the lower end of the sleeve 122 and the second hole 154 are square-shaped, thereby enabling the sleeve 122 and the first valve body 104 to be rotated together in a circumferential direction. The reset device 126 is arranged on the sleeve 122, thereby rotating the first valve body 104 from the closed position to the open position. **In** the present application, the reset device 126 is a torsion spring, and the torsion spring is arranged on the sleeve 122. One end of the torsion spring is arranged on the housing 102, and the other end of the torsion spring is arranged on the sleeve 122. When the first valve body 104 is rotated from the open position to the closed position, the torsion spring is preloaded. When the first valve body 104 is in the closed position, the torsion spring applies a driving force to the first valve body 104 to rotate it from the closed position to the open position.

The control assembly further comprises a first control structure arranged on the shaft rod 108 and the sleeve 122, and a second control structure provided on the cover 124 and the sleeve 122, wherein the first control structure is configured such that when the second valve body 106 is rotated from the second position to the third position, the second valve body 106 drives the first valve body 104 to be rotated from the open position to the closed position. The second control structure is configured to rotate the first valve body 104 between the open position and the closed position.

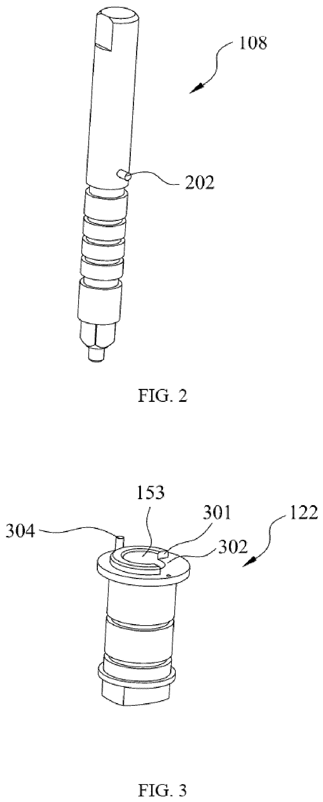

FIG. 2 is a perspective view of the shaft rod 108 shown in FIG. 1B. FIG. 3 is a perspective view of the sleeve 122 shown in FIG. 1B. As shown in FIGS. 2-3, the first control structure comprises a shaft rod guide bar 202 provided on the shaft rod 108 and a sleeve guide groove 302 provided on the sleeve 122. Specifically, the shaft rod guide bar 202 is formed by extending outwardly in a radial direction from a side of the shaft rod 108. An upper surface of the sleeve 122 is provided with an upwardly protruded stopper 301. The blocker 301 is continuously distributed in the circumferential direction over approximately 270°, thereby forming the sleeve guide groove 302 located between two ends of the stopper 301. That is, the sleeve guide groove 302 is disposed along a circumferential direction of the sleeve 122 and distributed at an angle of substantially 90° (i.e., the angle formed by two ends of the sleeve guide groove 302 is 90°). When the shaft rod guide bar 202 is accommodated within the sleeve guide groove 302 and rotated in the sleeve guide groove 302, the shaft rod 108 is capable of being rotated relative to the sleeve 122. When the shaft rod guide bar 202 is located at an end of the sleeve guide groove 302, the shaft rod guide bar 202 is capable of applying a force to the sleeve 122 in a circumferential direction, thereby driving the sleeve 122 to be rotated.

FIG. 4 is a perspective view of the cover 124 shown in FIG. 1B. As shown in FIGS. 3-4, the second control structure comprises a sleeve guide bar 304 arranged on the sleeve 122 and a cover guide groove 402 arranged on the cover 124. Specifically, the sleeve guide bar 304 is formed by extending upwardly (i.e., in an axial direction) from the upper surface of the sleeve 122. The cover guide groove 402 is arranged on a lower surface of the cover 124 and is formed by recessing upwardly from the lower surface of the cover 124. The cover guide groove 402 is distributed at an angle of substantially 90° (i.e., the angle formed by two ends of the cover guide groove 402 is 90°). Since the cover 124 is connected to the housing 102, the cover guide groove 402 in the cover 124 is capable of maintaining a rotational angle of 90° accommodated in the sleeve guide bar 304.

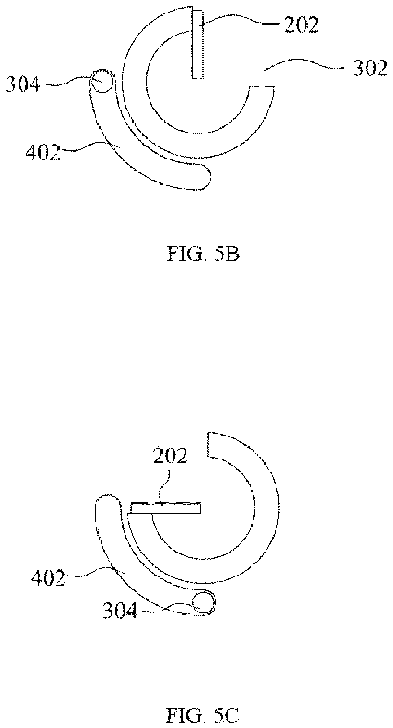

FIG. 5A is a schematic diagram of the first control structure and the second control structure when the first valve body 104 is in the open position and the second valve body 106 is in the first position. FIG. 5B is a schematic diagram of the first control structure and the second control structure when the first valve body 104 is in the closed position and the second valve body 106 is in the second position. FIG. 5C is a schematic diagram of the first control structure and the second control structure when the first valve body 104 is in the closed position and the second valve body 106 is in the third position. As shown in FIG. 5A, when the first valve body 104 is in the open position and the second valve body 106 is in the first position, the shaft rod guide bar 202 is located at a first end (i.e., the right end) of the sleeve guide groove 302 and sleeve guide bar 304 is located at a first end (i.e., the left end) of the cover guide groove 402. When it is necessary to control the flow rate of the fluid passing through the valve, the shaft rod 108 can be controlled to be rotated, thereby rotating the second valve body 106 to adjust a flow area of the valve body channel 146. As the shaft rod 108 is rotated in the counter-clockwise direction by 90°, the second valve body 106 is rotated from the first position to the second position. During the rotation, the flow area of the valve body channel 146 gradually decreases until the second valve body 106 disconnects the valve body channel 146, and the valve is closed. At this point, the first valve body 104 is in the open position and the second valve body 106 is in the second position. More specifically, the shaft rod guide bar 202 is located at a second end (i.e., the left end) of the sleeve guide groove 302 and the sleeve guide bar 304 is located at the first end (i.e., the left end) of the cover guide groove 402. It should be noted that during the rotation, since the shaft rod guide bar 202 is rotated relative to the sleeve 122 within the sleeve guide groove 302 during the rotation of the shaft rod 108, the position of the first valve body 104 remains unchanged at this point.

As the shaft rod 108 continues to be rotated in the counter-clockwise direction, the shaft rod guide bar 202 of the shaft rod 108 abuts against the edge of the sleeve guide groove 302, thereby applying a force to the sleeve 122 and driving the sleeve 122 to be rotated in the counter-clockwise direction. When the sleeve 122 has been rotated in the counter-clockwise direction by 90°, the first valve body 104 is in the closed position and the second valve body 106 is in the third position. More specifically, the shaft rod guide bar 202 is located at the second end of the sleeve guide groove 302, and the sleeve guide bar 304 is located at a second end (i.e., the right end) of the cover guide groove 402. At this point, the second valve body 106 disconnects the valve body channel 146, and the first valve body 104 disconnects the housing channel 142, the valve remaining closed. It should be noted that during the rotation, the torsion spring is preloaded.

The opening process of the valve will be described below with reference to FIGS. 5C-5A. As shown in FIG. 5C, when the first valve body 104 is in the closed position and the second valve body 106 is in the third position, the shaft rod guide bar 202 is located at the second end of the sleeve guide groove 302 and the sleeve guide bar 304 is located at the second end (i.e., the right end) of the cover guide groove 402. When it is necessary to open the valve, the shaft rod 108 can be controlled to be rotated in a clockwise direction, thereby rotating the second valve body 106. Although the shaft rod 108 is controlled to be rotated in the clockwise direction, the preloaded torsion spring is capable of applying a force to the sleeve 122 so that the sleeve 122 and the first valve body 104 connected to the sleeve 122 are also rotated in the clockwise direction. As a result, both the first valve body 104 and the second valve body 106 are rotated by 90° in the clockwise direction, with the first valve body 104 in the open position and the second valve body 106 in the second position. Subsequently, the shaft rod 108 continues to be rotated by 90° in the clockwise direction so that the shaft rod guide bar 202 continues to be rotated by 90° in the clockwise direction within the sleeve guide groove 302 so as to be rotated from the second position to the first position. As a result, the valve is opened.

Among the existing valves, a butterfly valve is used for regulating the flow rate, and a ball valve is used for shutting off flow of fluid. However, existing valves are not capable of achieving functions of both the butterfly valves and the ball valves simultaneously. Even though some of the valves have integrated the functions of the butterfly valve and the ball valve, those valves require two controllers to control the butterfly valve and the ball valve, respectively, which complicates the control process.

In the valve of the present application, the rotation of the first valve body 104 and the second valve body 106 is controlled by the control assembly. More specifically, an external control device (for example, an electric motor) controls the opening and closing of the valve simply by means of controlling a shaft rod 108, thereby simplifying the control logic of the valve.

Although the present disclosure has been described in conjunction with the examples of embodiments outlined above, various alternatives, modifications, variations, improvements and/or substantial equivalents, whether currently known or foreseeable now or in the near future, may be obvious to those of at least ordinary skill in the art. **In** addition, the technical effects and/or technical problems described in the present specification are exemplary, and not limiting; Therefore, the disclosure in the present specification may be used to address other technical problems and have other technical effects and/or can address other technical problems. Accordingly, the examples of embodiments of the present disclosure, as set forth above, are intended to be illustrative, and not limiting. Various changes can be practiced without departing from the spirit or scope of the present disclosure. Accordingly, the present disclosure is intended to cover all known or earlier developed alternatives, modifications, variations, improvements and/or substantial equivalents.

## Claims

1. A valve, comprising:
a housing (102), the housing (102) defining a housing channel (142);
a first valve body (104), the first valve body (104) being arranged in the housing channel (142) in a rotatable manner and defining a valve body channel (146), and the first valve body (104) being capable of connecting or disconnecting the housing channel (142);
a second valve body (106), the second valve body (106) being arranged in the valve body channel (146) in a rotatable manner, so as to connect or disconnect the valve body channel (146); and
a control assembly, the control assembly being configured to control the rotation of the first valve body (104) and the second valve body (106).

2. The valve according to claim 1, wherein
the second valve body (106) has a first position, a second position and a third position and is rotatable among the first position, the second position and the third position, and the first valve body (104) has an open position and a closed position and is rotatable between the open position and the closed position;
wherein the control assembly, the first valve body (104) and the second valve body (106) are configured such that when the second valve body (106) is rotated between the first position and the second position, the first valve body (104) is in the open position; and when the second valve body (106) is rotated from the second position to the third position, the second valve body (106) drives the first valve body (104) to be rotated from the open position to the closed position.

3. The valve according to claim 2, wherein the valve further comprises:
a reset device (126);
and the reset device (126) is configured such that when the second valve body (106) is rotated from the third position to the second position, the reset device (126) rotates the first valve body (104) from the closed position to the open position.

4. The valve according to claim 3, wherein the control assembly comprises:
a shaft rod (108), the shaft rod (108) being connected to the second valve body (106) and rotated together with the second valve body (106);
a sleeve (122), the sleeve (122) being sleeved on the shaft rod (108) and rotated together with the first valve body (104); and
a cover (124), the cover (124) being arranged above the sleeve (122) and connected to the housing (102);
wherein the shaft rod (108) and the sleeve (122) are provided with a first control structure thereon, the first control structure being configured such that when the second valve body (106) is rotated from the second position to the third position, the second valve body (106) drives the first valve body (104) to be rotated from the open position to the closed position;
wherein the cover (124) and the sleeve (122) are provided with a second control structure thereon, the second control structure being configured to rotate the first valve body (104) between the open position and the closed position.

5. The valve according to claim 4, wherein:
the reset device (126) is a torsion spring, one end of the torsion spring being arranged on the housing (102), and the other end of the torsion spring being arranged on the sleeve (122).

6. The valve according to claim 4, wherein:
the first control structure comprises a shaft rod guide bar (202) being arranged on a side of the shaft rod (108) and extending outwardly in a radial direction, and a sleeve guide groove (302) being arranged on the sleeve (122) and disposed circumferentially;
the sleeve guide groove (302) and the shaft rod guide bar (202) are configured such that when the shaft rod guide bar (202) is accommodated in the sleeve guide groove (302) and rotated within the sleeve guide groove (302), the shaft rod (108) is movable relative to the sleeve (122); and when the shaft rod guide bar (202) is located at an end of the sleeve guide groove (302), the shaft rod guide bar (202) is capable of applying a force to the sleeve (122) to drive the sleeve (122) to be rotated.

7. The valve according to claim 6, wherein:
the angle formed by two ends of the sleeve guide groove (302) is 90°.

8. The valve according to claim 4, wherein:
the second control structure comprises a sleeve guide bar (304) being arranged at an upper part of the sleeve (122) and extending in an axial direction, and a cover guide groove (402) being arranged on the cover (124) and disposed circumferentially.

9. The valve according to claim 8, wherein:
the angle formed by two ends of the cover guide groove (402) is 90°.

10. The valve according to claim 2, wherein:
when the second valve body (106) is located and rotated between the first position and the second position, the second valve body (106) is capable of regulating a flow rate of a fluid flowing through the valve.
